# EUROPÄISCHE PATENTSCHRIFT

(11) **EP 1 095 379 B1**
(45) Veröffentlichungstag und Bekanntmachung des Hinweises auf die Patenterteilung: **11.09.2002**
(21) Anmeldenummer: 99931093.1
(22) Anmeldetag: 17.06.1999
(51) Int. Cl.: G21K 1/06

(54) **Spiegel mit einem Substrat aus Kristall fur EUV**
Mirror with crystal substrate for EUV
Miroir à substrat cristallin pour UVE

(30) Priorität: 08.07.1998 DE 19830449
(43) Veröffentlichungstag der Anmeldung: 02.05.2001
(73) Patentinhaber: Carl Zeiss, 89518 Heidenheim (Brenz) (DE); CARL-ZEISS-STIFTUNG, HANDELND ALS CARL ZEISS, 89518 Heidenheim (Brenz) (DE)
(72) Erfinder: KAISER, Winfried, D-73431 Aalen (DE)
(86) Internationale Anmeldenummer: EP9904209
(87) Internationale Veröffentlichungsnummer: WO00003400

(56) Entgegenhaltungen:
- US-A- 4 282 543
- PATENT ABSTRACTS OF JAPAN vol. 1998, no. - , 31. März 1998 (1998-03-31) & JP 09 318800 A (JAPAN AVIATION ELECTRON IND LTD), 12. Dezember 1997 (1997-12-12)
- PATENT ABSTRACTS OF JAPAN vol. 516, no. 1443, 23. Oktober 1992 (1992-10-23) & JP 04 190200 A (ISHIKAWAJIMA HARIMA), 8. Juli 1992 (1992-07-08)
- PATENT ABSTRACTS OF JAPAN vol. 254, no. 772, 13. Juni 1989 (1989-06-13) & JP 01 053408 A (HITACHI), 1. März 1989 (1989-03-01)
- PATENT ABSTRACTS OF JAPAN vol. 017, no. 383 (E-1400), 19. Juli 1993 (1993-07-19) & JP 05 067525 A (TDK CORP), 19. März 1993 (1993-03-19)

## Beschreibung

Die Erfindung betrifft einen Spiegel mit einem Substrat aus Kristall und ein Herstellverfahren dafür, sowie eine EUV-Projektionsbelichtungsanlage damit.

Monokristallines Silizium ist für anspruchsvolle Spiegel mit hoher thermischer Belastung bei bester Formkonstanz ein bevorzugtes Substratmaterial.

Für Anwendungen im Röntgenbereich, insbesondere für weiche Röntgenstrahlung, auch Extrem-Ultraviolett (EUV) genannt, sind extrem glatte Oberflächen mit Mikrorauhigkeitswerten im Angström-Bereich erforderlich; Dies wird mit sogenannten "Super-Polish" erreicht.

Silizium-Substrate lassen sich in dieser Qualität besonders im Fall stark gekrümmter Flächen erfahrungsgemäß nur schlecht oder gar nicht homogen über ausreichend große Flächen homogen polieren.

Bevorzugte Anwendung finden derartige EUV-Spiegel in der EUV-Lithographie für die Spiegel von Beleuchtung, Maske und Projektionsobjektiv. Ihre Politurqualität ist dabei entscheidend für die Brauchbarkeit des ganzen Systems. Dies folgt z.B. aus.K. Hoh, Bull. Electrotechn. Lab. 49, No. 12, Oct. 1985, page 47-54, T.E. Jewell et al. Proz. SPIE Vol. 1527 (1991), David M. Williamson, OSA IODC Conference paper LWA 2-1, page 181-184, June 10, 1998.

Aus JP-B2-96/032 592 ist ein Röntgenspiegel bekannt, bei dem eine Matrix mit gesintertem SiC mit kristallinem SiC beschichtet ist, wodurch eine präzise glatte Oberfläche erhalten wird.

Aus der US-A-4,282,543 ist ein SOS-Substrat zur Herstellung von Halbleiterbauelementen bekannt. Dabei ist eine Silizium-Substratplatte vorgesehen, auf die eine Saphir-Deckschicht aufgebracht wird. Um Risse in der Saphir-Deckschicht zu vermeiden und die Spannungen im Substrat zu reduzieren, wird mit Hilfe der thermischen Oxidation durch die Saphir-Schicht hindurch eine 0.1 bis 2µm dicke amorphe SiO₂-Zwischenschicht gebildet. Auf der Saphir-Schicht werden dann weitere Silizium- und Saphir-Schichten aufgebracht, in die die Halbleiterbauelemente integriert werden.

Aufgabe der Erfindung ist die Bereitstellung eines Spiegels mit einem Substrat aus Kristall, welcher eine extrem glatte Oberfläche aufweist.

Gelöst wird diese Aufgabe durch einen Spiegel nach Anspruch 1. Demnach wird auf einen Substratkörper aus einem Kristall mit geringer Wärmeausdehnung und hoher thermischer Leitfähigkeit (Diamant, BN, SiC, Silizium als Beispiele) eine dünne amorphe Schicht z.B. aus Quarzglas, amorphem SiO₂, Al₂O₃ aufgebracht. Damit wird eine bekannt gut zum "Super-Polish" geeignete Deckschicht bereitgestellt, ohne die sonstigen Eigenschaften des Substrats zu beeinträchtigen.

Eine vorteilhafte Ausführung nach Anspruch 4 sieht eine Schichtdicke der amorphen Schicht von 1-100 µm vor.

Anspruch 8 gibt ein bevorzugtes Herstellverfahren für einen derartigen Spiegel.

Anspruch 10 gibt die vorteilhafte Verwendung erfindungsgemäßer Spiegel in EUV-Projektionsbelichtungsanlagen wieder.

Vorteilhafte Ausgestaltungen der Erfindung ergeben sich aus den Merkmalen der abhängigen Ansprüche 2, 3, 5, 6, 7 und 9.

Näher erläutert wird die Erfindung anhand der Zeichnung:

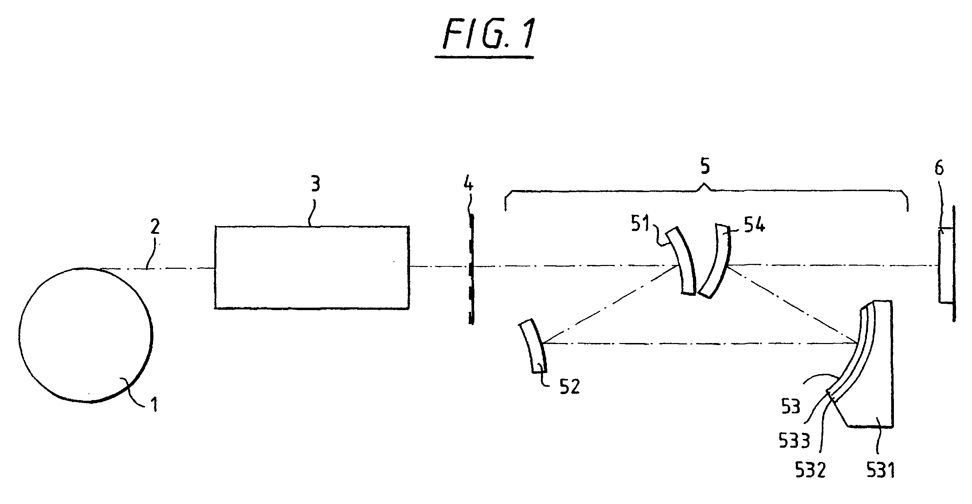

Deren Figur 1 zeigt schematisch eine erfindungsgemäße EUV-Projektionsbelichtungsanlage.

Der Aufbau einer solchen EUV-Projektionsbelichtungsanlage ist an sich in zahlreichen Varianten bekannt z.B. aus den o.g. Schriften Jewell und Williamson und den darin genannten Zitaten. Sie umfaßt eine EUV-Quelle 1, z.B. ein Synchrotron oder eine Laser-Plasmafokus-Quelle, welche einen EUV-Strahl 2 erzeugt mit z.B. 13 nm Wellenlänge oder einer anderen Wellenlänge im bevorzugten Bereich von ca. 10 bis 20 nm, für die geeignete Multilayer-Reflexschichten (siehe unten 533) zur Verfügung stehen.

Eine Beleuchtungs-Optik 3 dient zur geeigneten Formung des EUV Lichts hinsichtlich Lichtleitwert, Pupillenfüllung, Homogenität, Telezentrie und so weiter. Damit wird die Maske 4 beleuchtet, dargestellt als Transmissionsmaske, vielfach bevorzugt jedoch auch als Reflexionsmaske. Diese Maske 4 wird durch ein Projektionsobjektiv 5 auf das Objekt 6, den Wafer, verkleinert abgebildet.

Das Projektionsobjektiv 5 enthält wie in mehreren bekannten Designs vier gekrümmte Spiegel 51, 52, 53, 54. Davon ist stellvertretend an Spiegel 53 der erfindungsgemäße Aufbau mit dem Silizium-Einkristall-Substrat 531, der dünnen Deckschicht 532 aus amorphem Quarz, die mit "Super-Polish" die hochgenaue Endkontur des Spiegels 53 definiert, und der Multilayer-Reflexschicht 533 dargestellt. Letztere ergibt als "distributed Bragg reflector" fiir einen bestimmten Spektralbereich relativ hohe Reflektivität von rund 40-60%.

Das Substrat 531 ist in seiner Form durch die Erfordernisse mechanischer Stabilität, Kühlung, Einbau in Fassung, Anpassung an den Strahlengang (Vignettierung) usw. bestimmt. Die Nutzfläche wird zunächst endkonturnah präzise optisch poliert. Dann wird die dünne amorphe Quarzschicht 532 abgeschieden. Dazu eignet sich z.B. das CVD-Verfahren. Deformationen der Spiegelfläche durch Spannungen der Schicht 532 können durch die Prozeßparameter und Nachbehandlungen minimal gehalten werden. Durch Vorhalt bei der Formgebung des Substrats 531 und durch entsprechende Politur der Quarzschicht 532 können sie kompensiert werden.

Die amorphe Quarzschicht 532 dient also nicht als Haftgrund, Diffusionssperre oder ähnliche Hilfsschicht der Multilayer-Reflexschichten 533, sondern vielmehr als das die Kontur des Spiegels 53 tragende Material.

Nach der Beschichtung mit der Quarzschicht 532 erfolgt also demnach die abschließende formgebende Bearbeitung, das sogenannte "Super-Polish".

Auf dieser Schicht 532 ist dann in bekannter Weise eine Reflexschicht 533, aufgebaut als Multilayer-EUV-Reflexschicht, angeordnet.

Natürlich können derartig aufgebaute Spiegel auch an jeder anderen Stelle der Projektionsbelichtungsanlage und auch in anderen Geräten, z.B. Röntgen-Mikroskopen oder Teleskopen eingesetzt werden.

Jedes Material des Substratkörpers, das für den "bulk" vorteilhaft ist, wie die oben genannten Materialien geringer Wärmeausdehnung und gleichzeitig hoher Wärmeleitfähigkeit, kann mit einer dünnen Deckschicht aus gut in optischer Qualität polierbarem Material versehen werden. Die Anpassung hinsichtlich Hafteigenschaften, Spannungen, Korrosion usw. wird mit bekannten Kriterien erreicht.

## Patentansprüche

1. Spiegel mit einem Substrat aus Kristall, **dadurch gekennzeichnet,**
**daß** eine amorphe Deckschicht auf das Substrat aufgebracht ist, und
**daß** die amorphe Deckschicht mit einer Multilayer-Reflexschicht belegt ist.

2. Spiegel nach Anspruch 1, **dadurch gekennzeichnet,**
**daß** das Substrat aus mindestens einem der nachfolgenden Kristalle: Diamant, BN, SiC oder Silizium besteht.

3. Spiegel nach einem der Ansprüche 1 bis 2, **dadurch gekennzeichnet,**
**daß** die Deckschicht aus mindestens einem der nachfolgenden amorphen Materialien: Quarzglas, SiO₂ oder Al₂O₃ besteht.

4. Spiegel nach einem der Ansprüche 1 bis 3, **dadurch gekennzeichnet,**
**daß** die amorphe Deckschicht eine Dicke im Bereich 1µm bis 100µm aufweist.

5. Spiegel nach einem der Ansprüche 1 bis 4, **dadurch gekennzeichnet,**
**daß** die Mikrorauhigkeit der amorphen Deckschicht im Angström-Bereich liegt.

6. Spiegel nach einem der Ansprüche 1 bis 5, **dadurch gekennzeichnet,**
**daß** die Multilayer-Reflexschichten für einen Wellenlängenbereich von 10mn-20nm, vorzugsweise 13nm ausgelegt sind.

7. Spiegel nach einem der Ansprüche 1 bis 6, **dadurch gekennzeichnet,**
**daß** der Spiegel eine gekrümmte Oberfläche aufweist.

8. Herstellverfahren für einen Spiegel nach einem des Ansprüche 1 bis 7, bei dem ein Substrat aus Kristall endkonturnah geformt wird, eine amorphe Deckschicht auf der Spiegelseite des Substrats abgeschieden wird, dann eine optische Endpolitur erfolgt und anschließend eine Multilayer-Reflexschicht aufgebracht wird.

9. Herstellverfahren nach Anspruch 8, **dadurch gekennzeichnet, daß** die amorphe Deckschicht mittels CVD abgeschieden wird.

10. EW-Projektionsbelichtungsanlage mit einer EUV-Quelle, einer Beleuchtungsaptik, einer Maske, einem Projektionsobjektiv und einem Wafer, **dadurch gekennzeichnet, daß** mindestens ein Spiegel nach den Ansprüchen 1 bis 7 in der Beleuchtungsoptik oder in dem Projektionsobjektiv enthalten ist.

## Claims

1. Mirror having a crystal substrate, **characterized in that** an amorphous covering layer is applied to the substrate, and **in that** the amorphous covering layer is coated with a multilayer reflective coating.

2. Mirror according to Claim 1, **characterized in that** the substrate comprises at least one of the following crystals: diamond, BN, SiC or silicon.

3. Mirror according to one of Claims 1 and 2, **characterized in that** the covering layer comprises at least one of the following amorphous materials: quartz glass, SiO₂ or Al₂O₃.

4. Mirror according to one of Claims 1 to 3, **characterized in that** the amorphous covering layer has a thickness in the range from 1 µm to 100 µm.

5. Mirror according to one of Claims 1 to 4, **characterized in that** the microroughness of the amorphous covering layer is in the angstrom range.

6. Mirror according to one of Claims 1 to 5, **characterized in that** the multilayer reflective coatings are designed for a wavelength range from 10 nm-20 nm, preferably 13 nm.

7. Mirror according to one of Claims 1 to 6, **characterized in that** the mirror has a curved surface.

8. Process for producing a mirror according to one of Claims 1 to 7, in which a crystal substrate is formed near net shape, an amorphous covering layer is deposited on the mirror side of the substrate, then optical fine-polishing takes place, after which a multilayer reflective coating is applied.

9. Production process according to Claim 8, **characterized in that** the amorphous covering layer is deposited by means of CVD.

10. EUV projection-lighting installation having an EUV source, illumination optics, a mask, a projection lens and a wafer, **characterized in that** the illumination optics or the projection lens include at least one mirror according to one of Claims 1 to 7.

## Revendications

1. Miroir présentant un substrat en cristal, **caractérisé en ce qu'**une couche de recouvrement amorphe est appliquée sur le substrat et **en ce que** la couche de recouvrement amorphe est revêtue d'une couche de réflexion multicouches.

2. Miroir selon la revendication 1, **caractérisé en ce que** le substrat est constitué d'au moins un des cristaux suivants : diamant, BN, SiC ou silicium.

3. Miroir selon l'une quelconque des revendications 1 à 2, **caractérisé en ce que** la couche de recouvrement est constituée d'au moins un des matériaux amorphes suivants : verre de quartz, SiO₂ ou Al₂O₃.

4. Miroir selon l'une quelconque des revendications 1 à 3, **caractérisé en ce que** la couche de recouvrement amorphe présente une épaisseur dans la plage de 1 µm à 100 µm.

5. Miroir selon l'une quelconque des revendications 1 à 4, **caractérisé en ce que** la microrugosité de la couche de recouvrement amorphe se situe dans la plage de l'angström.

6. Miroir selon l'une quelconque des revendications 1 à 5, **caractérisé en ce que** les couches de réflexion multicouches sont prévues pour une plage de longueurs d'onde de 10 nm à 20 nm, de préférence de 13 nm.

7. Miroir selon l'une quelconque des revendications 1 à 6, **caractérisé en ce que** le miroir présente une surface courbée.

8. Procédé de fabrication d'un miroir selon l'une quelconque des revendications 1 à 7, dans lequel un substrat en cristal est façonné de manière proche du contour final, qu'une couche de recouvrement amorphe est déposée sur le côté miroir du substrat, qu'un polissage final optique est ensuite réalisé et qu'une couche de réflexion multicouches est ensuite appliquée.

9. Procédé de fabrication selon la revendication 8, **caractérisé en ce que** la couche de recouvrement amorphe est appliquée par CVD.

10. Installation d'éclairage et de projection aux UVE présentant une source d'UVE, un dispositif optique d'éclairage, un masque, un objectif de projection et une tranche, **caractérisée en ce qu'**au moins un miroir selon les revendications 1 à 7 est contenu dans le dispositif optique d'éclairage ou dans l'objectif de projection.
